# EUROPÄISCHE PATENTANMELDUNG

(11) **EP 3 339 785 A1**
(43) Veröffentlichungstag der Anmeldung: **27.06.2018**
(21) Anmeldenummer: 16205307.8
(22) Anmeldetag: 20.12.2016
(51) Int. Cl.: F25J 3/00, F28D 7/00, F28F 17/00, F28F 27/02, F25J 3/06, B01D 53/00, B01D 53/26, F25J 5/00

(54) **VERFAHREN UND ANLAGE ZUM ABKÜHLEN EINES MEDIUMS**

(71) Anmelder: Linde Aktiengesellschaft, 80331 München (DE)
(72) Erfinder: BAUER, Heinz, 82067 Ebenhausen (DE); BRAUN, Konrad, 83661 Lenggries (DE); DEICHSEL, Florian, 81373 München (DE); JUNGFER, Bernd, 82547 Achmühle (DE); KROBOTH, Markus, 80797 München (DE); LAMUELA CALVO, Ana-Maria, 80339 München (DE); OBERMEIER, Andreas, 85658 Egmating (DE); SPREEMAN, Jürgen, 83022 Rosenheim (DE); STEINBAUER, Manfred, 82399 Raisting (DE); WINDMEIER, Christoph, 82538 Geretsried (DE); LEL, Viacheslav, 82031 Grünwald (DE)
(74) Vertreter: Richmond, Sarah

(57) **Zusammenfassung**

Die Erfindung betrifft ein Verfahren zum Abkühlen eines Mediums (a) mittels mehrerer Wärmetauscher (110, 120), bei dem wenigstens ein Wärmetauscher (110) in einem aktiven Zustand betrieben wird, wobei in dem aktiven Zustand das Medium (a) durch den Wärmetauscher (110, 210) geleitet und abgekühlt wird und wenigstens eine Komponente (c) des Mediums (a) in dem Wärmetauscher (110) ausgeforen wird, wobei zugleich wenigstens ein Wärmetauscher (120) in einem inaktiven Zustand betrieben wird, wobei in dem inaktiven Zustand das Medium (a) nicht durch den Wärmetauscher (120) geleitet wird und der Wärmetauscher (120) von der wenigstens einen ausgefrorenen Komponente (c), sofern vorhanden, befreit wird, und wobei ein Wärmetauscher (110), der in dem aktiven Zustand betrieben wird, in den inaktiven Zustand gebracht wird, sobald wenigstens ein vorgegebenes Kriterium erfüllt ist, sowie eine Anlage (100) zum Abkühlen eines Mediums (a).

## Beschreibung

Die Erfindung betrifft ein Verfahren sowie eine Anlage zum Abkühlen eines Mediums gemäß den Oberbegriffen der unabhängigen Patentansprüche.

Erdgas besteht neben der Hauptkomponente Methan in der Regel auch aus Komponenten mit einem höheren Siedepunkt, wie z.B. Ethan, Propan und höheren Alkanen sowie aus Komponenten mit einem niedrigeren Siedepunkt, wie z.B. Stickstoff, Wasserstoff und Helium.

Bei der Aufbereitung von Erdgas ist insbesondere der Gehalt an sogenannten Schwersiedern (nachfolgend auch als "schwersiedende Kohlenwasserstoff-Komponenten" bezeichnet) zu beachten. Hierunter werden im Rahmen dieser Anmeldung insbesondere Kohlenwasserstoffe mit mehr als sechs und insbesondere bis zu sechzehn Kohlenstoffatomen, aber auch Kohlenstoffdioxid oder Schwefelkomponenten, insbesondere Schwefelhaltige Komponenten wie Mercaptane, und Schwefelwasserstoff, verstanden. Beispiele für Schwersieder sind Hexan, Oktan und Benzol. Diese Schwersieder können beispielsweise bei der der Verflüssigung von Erdgas (im flüssigen Zustand auch als LNG - Liquid Natural Gas bezeichnet) abgeschieden werden. Hierzu kann beispielsweise eine sog. kryogene Rektifikation verwendet werden.

Eine kryogene Rektifikation zur Abscheidung von schwersiedenden Kohlenwasserstoff-Komponenten (auch als Heavy Hydrocarbons, kurz HHC bezeichnet) bei der Erdgasverflüssigung (Natural Gas Liquefaction) in Erdgas-Verflüssigungsprozessen (LNG-Prozessen) ist in der Regel dann notwendig, wenn einer Konzentration der schwersiedenden Kohlenwasserstoff-Komponenten mehr als ca. 1 bis 3 mol-ppm beträgt. Die Abscheidung von schwersiedenden Kohlenwasserstoff-Komponenten erfordert in der Regel zusätzliche Ausrüstung und hat einen negativen Einfluss auf die Prozesseffizienz. Außerdem kann je nach Druck des zugeführten Gases eine Drosselung des Erdgases auf niedrigere Drücke notwendig sein, um die Abtrennung durchführen zu können. Zur weiteren Verflüssigung muss das Erdgas anschließend unter Umständen wieder auf höhere Drücke komprimiert werden, wozu wieder weitere Ausrüstung benötigt wird.

Die vorliegende Erfindung stellt sich vor diesem Hintergrund die Aufgabe, eine verbesserte und insbesondere energieeffizientere Möglichkeit zum Abkühlen eines Mediums, wobei während der Abkühlung bestimmte Komponenten ausgefroren werden, bereitzustellen.

### Vorteile der Erfindung

Die vorliegende Erfindung geht von einem Verfahren bzw. einer Anlage zum Abkühlen eines Mediums wie beispielsweise Erdgas mittels eines Wärmetauschers bzw. Unterkühlers aus, wobei im Wärmetauscher wenigstens eine Komponente des Mediums, im Falle von Erdgas insbesondere die erwähnten schwersiedenden Kohlenwasserstoff-Komponenten wie Hexan, Oktan und Benzol, ausgefroren werden. Unter Ausfrieren ist hierbei das Überführen von Dampf oder Flüssigkeit in einen festen Zustand durch Abkühlung im Bereichen tiefer Temperaturen bis zum Sublimationspunkt (Desublimieren) oder bis zum Erstarrungspunkt bzw. darunter zu verstehen. Wenngleich hier und im Folgenden von der Abkühlung von Erdgas und dem Ausfrieren von schwersiedenden Kohlenwasserstoff-Komponenten die Rede ist, so dient dies nur der Erläuterung der Erfindung. Es versteht sich, dass die vorgestellte Erfindung auch bei anderen Abkühlungsprozessen Anwendung findet, bei denen eine oder mehrere Komponenten im Wärmetauscher ausgefroren werden bzw. ausgefroren werden sollen.

Findet das Ausfrieren der schwersiedenden Kohlenwasserstoff-Komponenten im Wärmetauscher statt, steigt im Laufe der Zeit aufgrund der anwachsenden Schicht an ausgefrorenen schwersiedenden Kohlenwasserstoff-Komponenten der Druckverlust. Gleichzeitig sinkt die Effektivität der Wärmeübertragung. Sobald der Druckverlust einen Grenzwert übersteigt oder die nötige Wärme nicht mehr übertragen werden kann, muss der mit ausgefrorenen schwersiedenden Kohlenwasserstoff-Komponenten beladene Wärmetauscher gereinigt werden. Ein kontinuierlicher Betrieb der verwendeten Anlage zur Erdgasverflüssigung ist damit nicht möglich.

Es werden nun mehrere Wärmetauscher verwendet, wobei wenigstens ein Wärmetauscher in einem aktiven Zustand betrieben wird. In dem aktiven Zustand wird das Medium durch den jeweiligen Wärmetauscher geleitet und abgekühlt und wenigstens eine Komponente des Mediums wird in dem jeweiligen Wärmetauscher ausgeforen.

Erfindungsgemäß wird nun zugleich wenigstens ein Wärmetauscher in einem inaktiven Zustand betrieben. In dem inaktiven Zustand wird das Medium nicht durch den jeweiligen Wärmetauscher geleitet, dafür wird der jeweilige Wärmetauscher von der wenigstens einen ausgefrorenen Komponente, sofern vorhanden, d.h. wenn eines solche zuvor in diesem wenigstens einen Wärmetauscher ausgefroren wurde, befreit. Wenigstens einer der Wärmetauscher, die in dem aktiven Zustand betrieben werden, kann dabei in den inaktiven Zustand gebracht werden. Entsprechend kann wenigstens einer der Wärmetasucher, die in dem inaktiven Zustand betrieben werden, in den aktiven Zustand gebracht werden. Ein solcher Wechsel vom aktiven in den inaktiven Zustand kann von einem Kriterium wie beispielsweise dem Erreichen einer minimalen Durchflussrate von Medium durch den im aktiven Zustand betriebenen Wärmetauscher, eines maximalen Druckverlusts oder einer maximalen Austrittstemperatur des Mediums aus dem Wärmetauscher abhängig gemacht werden. Da immer (gegegebenenfalls abgesehen von einer kurzen Zeitdauer während eines Umschaltens zwischen verschiedenen Wärmetauschern) wenigstens ein Wärmetauscher im aktiven und wenigstens ein Wärmetauscher im inaktiven Zustand vorgesehen sind, versteht es sich, dass beim Umschalten eines Wärmetauschers vom aktiven in den inaktiven Zustand, falls nötig, ein Wärmetauscher vom inaktiven in den aktiven Zustand umgeschaltet wird. Im einfachsten Fall mit insgesamt zwei Wärmetauschern können diese beiden also abwechselnd zwischem dem aktiven und dem inaktiven Zustand hin und her geschaltet werden. Während des Wechselvorgans von aktiv zu inaktiv bzw. andersherum ist ein (kurzzeitiger) paralleler Betrieb von zwei Wärmetauschrn im aktiven Zustand denkbar.

Es versteht sich, dass durch die Wärmetauscher im aktiven Zustand, um die Abkühlung des Mediums zu erreichen, jeweils ein Kühlmittel geleitet wird. Hierzu können die Wärmetauscher beispielsweise ein oder mehrere Kanäle oder Rohre aufweisen, durch die das Medium geleitet wird. Diese Kanäle bzw. Rohre können dann von einem Mantel umgeben sein, wodurch ein Kanal gebildet wird, durch den das Kühlmittel geleitet werden kann.

Auf diese Weise ist also immer ein Wärmetauscher vorhanden, der zur Abkühlung und gegegebenfalls zur Verflüssigung des Mediums sowie zum Ausfrieren einer oder mehrere Komponenten des Mediums dient, während zugleich ein weiterer Wärmetauscher vorhanden ist, in dem bereits ausgefrorene Komponenten wieder entfernt werden können. Damit ist eine kontinuierliche Abkühlung des Mediums bzw. ein kontinierlicher Betrieb der Anlage möglich.

Eine Befreiung des jeweiligen Wärmetauschers in dem inaktiven Zustand von der wenigstens einen ausgefrorenen Komponente efolgt vorzugsweise, indem der jeweilige Wärmetauscher erwärmt wird. Hierzu kann insbesondere ein weiteres Medium, insbesondere ein solches mit einer Temperatur, die höher als eine aktuelle Temperatur des Wärmetausches ist, durch den jeweiligen Wärmetauscher geleitet werden. Dieses weitere Medium, das zur Erwärmung verwendet wird, wird im Falle von Gas auch als sog. De-Riming-Gas bezeichnet. Damit ist eine einfache Erwärmung des jeweiligen Wärmetauschers möglich. Durch die Ewärmung werden die ausgeforenen Komponenten flüssig oder gasförmig und können aus dem Wärmetauscher entweichen bzw. ausgespült werden. Eine weitere Möglichkeit, die ausgefrorenen Komponenten zu entfernen besteht darin, dass ein Druck von in dem Wärmetauscher befindlichem Medium reduziert wird. Auch auf diese Weise können die ausgefrorenen Komponenten gelöst werden.

Weiterhin ist es von Vorteil, wenn von den mehreren Wärmetauschern wenigstens ein Wärmetauscher mehrere Kanäle (oder Rohre) aufweist, durch die das Medium leitbar ist. Wenn wenigstens einer der Wärmetauscher mit den mehreren Kanälen im aktiven Zustand betrieben wird, dann kann durch wenigstens einen der Kanäle das Medium geleitet werden und durch wenigstens einen anderen der Kanäle nicht. Der wenigstens eine Kanal, durch den das Medium geleitet wird, kann dann gewechselt werden. Ein solcher Wechsel kann dabei von einem vorgegebenen weiteren Kritierum wie beispielsweise dem Erreichen einer minimalen Durchflussrate von Medium durch den aktuellen, wenigstens einen Kanal und/oder eines maximalen Druckverlusts abhängig gemacht werden. Mit anderen Worten können also innerhalb eines Wärmetauschers verschiedene Kanäle oder Rohre verwendet werden, durch die das Medium zu verschiedenen Zeiten geleitet wird. Zweckmäßig ist es dabei, wenn das Medium nach einem Wechsel des wenigstens einen Kanals, durch den das Medium geleitet wird, durch wenigstens einen Kanal, durch den es während eines aktuellen, ununterbrochenen aktiven Zustands noch nicht geleitet wurde, geleitet wird. Auf diese Weise können also verschiedene Kanäle hintereinander zur Durchleitung des Mediums verwendet werden.

Denkbar ist dabei auch, dass jeweils mehrere Kanäle (oder Rohre) gleichzeitig verwendet werden. Im Falle eines Rohrbündelwärmetauschers können also beispielsweise mehrere Rohre im Sinne einer sog. Rohrfraktion gleichzeitig verwendet und dann auch gewechselt werden. Je nach Anzahl der. Rohrfraktionen, beispielsweise zwei, drei oder vier, kann damit die Zeitdauer, die der Wärmetauscher im aktiven Zustand berieben werden kann, verlängert werden. Der Grund hierfür liegt darin, dass die Kanäle bzw. Rohrfraktionen immer dann gewechselt werden können, wenn der aktuelle Kanal bzw. die aktuelle Rohrfraktion durch die ausgefrorenen Komponenten zugesetzt ist. Im Vergleich zu nur einem Kanal bzw. nur einer Rohrfraktion kann die Zeitdauer im aktiven Zustand damit entsprechend vervielfacht werden. Ein weiterer Vorteil dabei ist, dass - insbesondere wenn auch weitere solche Wärmetauscher mit mehreren Kanälen verwendet werden - auch die Zeitdauer, welche der jeweilige Wärmetauscher im inaktiven Zustand verbleiben kann, entsprechend länger wird. Damit steht mehr Zeit zum Anwärmen des inaktiven Wärmetauschers zur Verfügung, so dass der Wärmetauscher weniger stark beansprucht wird, wodurch sich eine insgesamt längere Lebensdauer ergeben kann. Weiterhin werden die Wärmetauscher durch das seltenere Umschalten zwischen verschiedenen Wärmetauschern geringeren Beanspruchungen, die durch das Wechseln auftreten, ausgesetzt. Dadurch kann ebenfalls die Lebensdauer verlängert werden.

Im inaktiven Zustand können die mehereren Kanäle des entsprechenden Wärmetauschers dann vorzugsweise auch gleichzeitig von der wenigstens einen ausgefrorenen Komponente, sofern vorhanden, befreit werden. Die Zeitdauer, die zum Befreien des Wärmetauschers von den ausgefrorenen Komponenten nötig ist, ist damit nicht länger als bei einem Wärmetauscher mit nur einem Kanal bzw. nur einer Rohrfraktion. Entsprechend kann das Ewärmen zeitlich in die Länge gezogen werden, um die Beanspruchung zu reduzieren.

Eine erfindunsgemäße Anlage zum Abkühlen eines Mediums weist entsprechend mehrere Wärmetauscher auf, durch die das Medium leitbar ist und die jeweils in einem aktiven Zustand betreibbar sind, in dem das Medium zur Abkülung durch den jeweiligen Wärmetauscher leitbar und wenigstens eine Komponente des Mediums in dem jeweiligen Wärmetauscher ausfrierbar ist. Weiterhin sind die mehreren Wärmetauscher jeweils auch in einem inaktiven Zustand betreibbar, in dem das Medium nicht durch den jeweiligen Wärmetauscher leitbar und der jeweilige Wärmetauscher von der wenigstens einen ausgefrorenen Komponente, sofern vorhanden, befreibar ist. Die Anlage ist nun derart ausgebildet, dass wenigstens ein Wärmetauscher im aktiven Zustand und zugleich wenigstens ein Wärmetauscher im inaktiven Zustand betreibbar ist, wobei die Anlage weiterhin derart ausgebildet ist, dass wenigstens einer der Wärmetauscher, die in dem aktiven Zustand betrieben werden, in den inaktiven Zustand bringbar ist und dass wenigstens einer der Wärmetauscher, die in dem inaktiven Zustand betrieben werden, in den aktiven Zustand bringbar ist.

Vorzugsweise weist von den mehreren Wärmetauschern wenigstens ein Wärmetauscher mehrere Kanäle auf, durch die das Medium leitbar ist. Bei dem wenigstens einen Wärmetauscher mit den mehreren Kanälen ist dann, wenn er im aktiven Zustand betrieben wird, durch wenigstens einen der Kanäle das Medium leitbar und durch wenigstens einen anderen der Kanäle das Medium nicht leitbar. Zudem ist der wenigstens eine Wärmetauscher mit den mehreren Kanälen derart ausgebildet, dass der wenigstens eine Kanal, durch den das Medium leitbar ist, zumindest während des aktiven Zustands wechselbar ist.

Bezüglich der Vorteile sowie weiterer vorteilhafter Ausgestaltungen der erfindungsgemäßen Anlage sei zur Vermeidung von Wiederholungen auf obige Ausführungen zum erfindungsgemäßen Verfahren verwiesen, die hier entsprechend gelten.

Die Erfindung wird nachfolgend unter Bezugnahme auf die beigefügte Zeichnung näher erläutert, welche verschiedene Anlagenteile zeigt, anhand derer die erfindungsgemäßen Maßnahmen erläutert werden.

Kurze Beschreibung der Zeichnung
- Figur 1: zeigt eine Anlage zur Abkühlung eines Mediums gemäß einer bevorzugten Ausführungsform der Erfindung.
- Figur 2: zeigt eine Anlage zur Abkühlung eines Mediums gemäß einer weiteren bevorzugten Ausführungsform der Erfindung.

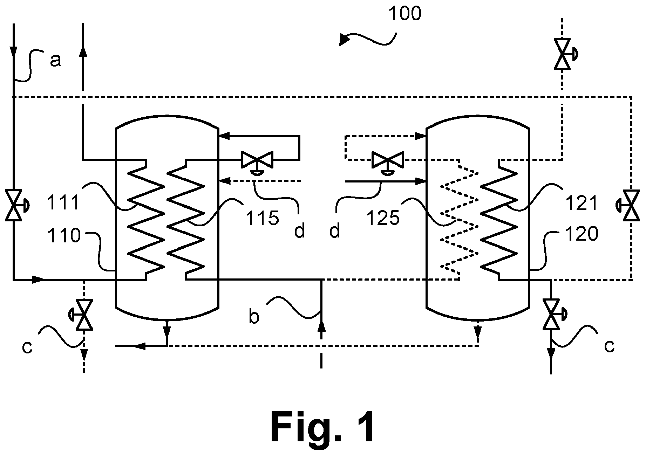

In Figur 1 ist eine Anlage 100 zur Abkühlung und auch zur Verflüssigung eines Mediums wie Erdgas dargestellt. Anhand der Anlage 100 soll im Folgenden neben der Anlage selbst auch ein Ablauf eines erfindungsemäßen Verfahrens in einer bevorzugten Ausführungform näher erläutert werden.

Die Anlage 100 weist vorliegend zwei Wärmetauscher 110 und 120 auf. Jeder der beiden Wärmetauscher 110 und 120 weist einen Kanal 111 bzw. 121 auf, durch den abzukühlendes Medium leitbar ist. Wenngleich hier von jeweils einem Kanal die Rede ist, können auch mehrere Kanäle oder Rohre, durch die das Medium gleichzeitig leitbar ist, parallel verwendet werden.

Weiterhin weist jeder der beiden Wärmetauscher 110 und 120 jeweils einen Kanal 115 bzw. 125 auf, durch den ein Kühlmittel bzw. ein Kältemittel vorgekühlt werden kann, bevor es durch Entspannung weiter abgekühlt und dann auf der Mantelseite der Wärmetauscher 110 bzw. 120 seine Kälte in entgegengesetzter Richtung strömend an die in den Kanälen 111 bzw. 121 strömenden Medien abgibt.

Das abzukühlende Medium kann nun als Strom a prinzipiell jedem der beiden Wärmetauscher 110 und 120 bzw. den entsprechenden Kanälen 111 bzw. 121 zugeführt bzw. durch diese geleitet werden. Durch den Einsatz geeigneter Ventile kann der Strom a des Mediums wahlweise durch den Wärmetauscher 110 oder den Wärmetauscher 120 geführt werden. Im gezeigten Beispiel wird der Strom a nur durch den Wärmetauscher 110 geführt, nicht jedoch durch den Wärmetauscher 120, was durch gestrichelte Linien angedeutet ist. Im Falle eines Wechsels von einem zum anderen Wärmetauscher können beide auch (kurzzeitig) parallel betrieben, d.h. vom Medium durchströmt, werden.

Das Kühlmittel kann als Strom b ebenfalls prinzipiell jedem der beiden Wärmetauscher 110 und 120 bzw. den entsprechenden Kanälen 115 bzw. 125 zugeführt bzw. durch diese geleitet werden. Durch den Einsatz geeigneter Ventile kann der Strom b des Kühlmittels wahlweise durch den Wärmetauscher 110 oder den Wärmetauscher 120 geführt werden. Im gezeigten Beispiel wird der Srom b nur durch den Wärmetauscher 110 geführt, nicht jedoch durch den Wärmetauscher 120, was durch gestrichelte Linien angedeutet ist. Im Falle eines Wechsels von einem zum anderen Wärmetauscher können beide auch (kurzzeitig) parallel betrieben, d.h. vom Kühlmittel durchströmt, werden

Damit wird der Wärmetauscher 110 also im aktiven Zustand betrieben, der Wärmetauscher 120 hingegen im inaktiven Zustand. Dies bedeutet, dass das Medium mittels des Wärmetauschers 110 abgekühlt bzw. verflüssigt wird, wobei - durch geeignete Regelung der Temperatur bzw. des Flusses des Kühlmittels - im Wärmetauscher 110, dort insbesondere im Kanal 111, ein oder mehrere Komponenten ausgefroren werden. Bei diesen Komponenten kann es sich im Falle von Erdgas als Medium insbesondere um schwersiedende Kohlenwasserstoffe, Wasser, Kohlenstoffdioxid und Schwefelhaltige Komponenten (Mercaptane, Schwefelwasserstoff) handeln, wie sie eingangs erläutert wurden.

Der Wärmetauscher 120 kann hingegen, beispielsweise durch die Einstellung des Flusses des Kühlmittels durch den Wärmetauscher oder auch zusätzlich durch andere geignete Maßnahmen wie Druckänderungen oder Durchleiten eines weiteren Mediums mit höherer Temperatur, aufgewärmt werden. Komponenten, die im Wärmetauscher 120, dort insbesondere im Kanal 121, ausgefroren wurden, weil der Wärmetauscher 120 zuvor - wie jetzt der Wärmetauscher 110 - im aktiven Zustand betrieben wurde, können durch dieses Aufwärmen abtauen und als Strom c aus dem Wärmetauscher 120 abgeführt bzw. entfernt werden. Zum Aufwärmen kann beispielsweise ein weiteres Medium als Strom d zugeführt werden. Es vesteht sich, dass bei entsprechend vertauschter Funktion der Wärmetauscher ein solcher Strom d dem Wärmetauscher 110 zugeführt werden und ein Strom c abgelassen werden können.

Ein Wechsel vom aktiven Zustand in den inaktiven Zustand kann dann erfolgen, wenn beispielsweise eine Durchflussrate von Medium durch den im aktiven Zustand betriebenen Wärmetauscher unter einen Minimalwert bzw. einen Schwellwert fällt, unterhalb welchem beispielsweise ein effizienter Betrieb nicht mehr möglich ist. Ein anderes oder weiteres Kriterium kann beispielsweise das Erreichen eines maximalen Druckverlusts sein, ab dem ein effizienter Betrieb nicht mehr möglich ist.

Dabei sollte darauf geachtet werden, dass der Wärmetauscher, der im inaktiven Zustand betrieben wird, hier der Wärmetauscher 120, bis zu dem Zeitpunkt, zu dem der zunächst im aktiven Zustand betriebene Wärmetauscher, hier der Wärmetauscher 110, in den inaktiven Zustand wechselt, wieder einsatzbereit ist, d.h. im aktiven Zustand betrieben werden kann. Dies bedeutet insbesondere, dass nach Möglichkeit die ausgefrorenen Komponenten bis dahin entfernt wurden und auch der Wärmetauscher wieder auf Betriebstemperatur abgekühlt ist.

Mit der gezeigten Anlage 100 ist somit ein kontinuierlicher Betrieb zum Abkühlen eines Mediums möglich, wobei Komponenten im Wärmetauscher bzw. abwechselnd in einem von beiden Wärmetauschern, ausgefroren werden können.

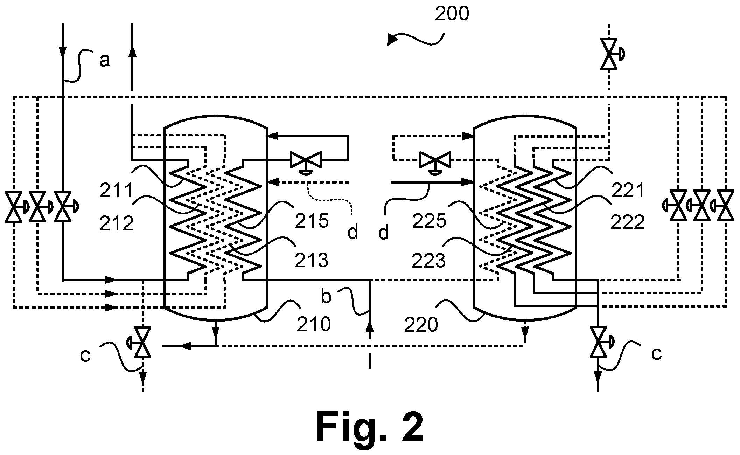

In Figur 2 ist eine Anlage 200 zur Abkühlung und auch zur Verflüssigung eines Mediums wie Erdgas dargestellt. Anhand der Anlage 200 soll im Folgenden neben der Anlage selbst auch ein Ablauf eines erfindungsemäßen Verfahrens in einer weiteren bevorzugten Ausführungform näher erläutert werden.

Die Anlage 200 entspricht in ihrem grundlegenden Aufbau der Anlage 100 gemäß Figur 1, allerdings weist vorliegend jeder der beiden Wärmetauscher 210 und 220 nicht nur einen Kanal, durch welchen das Medium leitbar ist, auf. Vielmehr weist jeder der beiden Wärmetauscher 210 und 220 jeweils drei Kanäle 211, 212 und 213 bzw. 221, 222 und 223 auf, durch die jeweils ein abzukühlendes Medium leitbar ist.

Weiterhin weist jeder der beiden Wärmetauscher 210 und 220 jeweils einen Kanal 215 bzw. 225 auf, durch den ein Kühlmittel leitbar ist. Diese Kanäle können wie bei der Anlage 100 gemäß Figur 1 ausgebildet sein. Wenngleich hier von jeweils einem Kanal die Rede ist, können auch hier mehrere Kanäle oder Rohre, durch die das Medium gleichzeitig leitbar ist, im Sinne einer Rohrfraktion parallel verwendet werden.

Bei jedem der beiden Wärmetauscher 210 und 220 kann nun das abzukühlende Medium, das als Strom a zugeführt wird, prinzipiell durch jeden der drei Kanäle 211, 212 und 213 bzw. 221, 222 und 223 geleitet werden. Durch den Einsatz geeigneter Ventile kann der Strom a des Mediums jedoch wahlweise nur durch einen der jeweils drei Kanäle geführt werden. Im gezeigten Beispiel wird der Strom a zum einen nur durch den Wärmetauscher 210, der hier im aktiven Zustand betrieben wird, geführt, und dort zum anderen nur durch den Kanal 211 geführt, nicht jedoch durch die Kanäle 212 und 213, was durch gestrichelte Linien angedeutet ist.

In diesem Zustand entspricht der Betrieb der Anlage 200 zunächst demjenigen der Anlage 100 gemäß Figur 1, allerdings kann nun der Strom a nach einer gewissen Zeit anstatt durch den Kanal 211 durch den Kanal 212 geführt werden. Entsprechend kann ein weiterer Wechsel zum Kanal 213 erfolgen. Denkbar ist auch ein paralleler Betrieb von beispielsweise den Kanälen 211 und 212. Ein solcher Wechsel kann beispielsweise immer dann erfolgen, wenn eine Durchflussrate von Medium durch den aktuellen verwendeten Kanal unter einen Minimalwert bzw. einen Schwellwert fällt, unterhalb welchem beispielsweise ein effizienter Betrieb nicht mehr möglich ist. Ein anderes oder weiteres Kriterium kann beispielsweise das Erreichen eines maximalen Druckverlusts sein, ab dem ein effizienter Betrieb nicht mehr möglich ist.

Dies bedeutet, dass der Wärmetauscher 210 solange im aktiven Zustand betrieben werden kann, bis alle Kanäle, hier drei Kanäle, mit ausgefrorenen Komponenten zugesetzt sind. Erst dann ist ein Wechsel in den inaktiven Zustand nötigt. Im Vergleich zur Anlage 100 gemäß Figur 1 ist damit ein länger andauernder Betrieb im aktiven Zustand möglich, im gezeigten Fall mit drei Kanälen also beispielsweise in etwa dreimal so lange.

Dies bedeutet weiterhin auch, dass der Wärmetauscher 220 eine entsprechend längere Zeitdauer im inaktiven Zustand betrieben werden kann. Dies ermöglicht eine langsamere Erwärmung des Wärmetauschers, was eine geringere Beanspruchung des Wärmetauschers bzw. von dessen Komponenten bzw. Bauteilen bedeutet. Wie am Wärmetauscher 220 zu sehen ist, können die einzelnen Kanäle, hier die Kanäle 221, 222 und 223 gleichzeitig von den ausgeforenen Komponenten (Strom c) befreit werden. Zum Aufwärmen kann beispielsweise ein weiteres Medium als Strom d zugeführt werden. Es vesteht sich, dass bei entsprechend vertauschter Funktion der Wärmetauscher ein solcher Strom d dem Wärmetauscher 210 zugeführt werden und ein Strom c abgelassen werden können.

Mit der gezeigten Anlage 200 ist somit nicht nur ein kontinuierlicher Betrieb zum Abkühlen eines Mediums möglich, wobei Komponenten im Wärmetauscher bzw. abwechselnd in einem von beiden Wärmetauschern, ausgefroren werden können, sondern ein einzelner Zyklus, während dem sich ein Wärmetauscher in einem aktiven bzw. inaktiven Zustand befindet, kann entsprechend länger andauern, was zu einer längeren Lebensdauer der gesamten Anlage beiträgt, oder bei gleicher Zykluslänge das Ausfrieren einer grösseren Menge an Feststoff ermöglichen.

## Patentansprüche

1. Verfahren zum Abkühlen eines Mediums (a) mittels mehrerer Wärmetauscher (110, 120, 210, 220), bei dem wenigstens ein Wärmetauscher (110,210) in einem aktiven Zustand betrieben wird,
wobei in dem aktiven Zustand das Medium (a) durch den jeweiligen Wärmetauscher (110, 210) geleitet und abgekühlt wird und wenigstens eine Komponente (c) des Mediums (a) in dem jeweiligen Wärmetauscher (110, 210) ausgeforen wird,
**dadurch gekennzeichnet, dass** zugleich wenigstens ein Wärmetauscher (120, 220) in einem inaktiven Zustand betrieben wird,
wobei in dem inaktiven Zustand das Medium (a) nicht durch den jeweiligen Wärmetauscher (120, 220) geleitet wird und der jeweilige Wärmetauscher (120, 220) von der wenigstens einen ausgefrorenen Komponente (c), sofern vorhanden, befreit wird, und
wobei wenigstens einer der Wärmetauscher (110, 210), die in dem aktiven Zustand betrieben werden, in den inaktiven Zustand gebracht wird, und wenigstens einer der Wärmetauscher (120, 220), die in dem inaktiven Zustand betrieben werden, in den aktiven Zustand gebracht wird,sobald wenigstens ein vorgegebenes Kriterium erfüllt ist.

2. Verfahren nach Anspruch 1, wobei in dem inaktiven Zustand der jeweiligen Wärmetauscher (120, 220) von der wenigstens einen ausgefrorenen Komponente (c) befreit wird, indem der jeweilige Wärmetauscher (120, 220) erwärmt wird und/oder indem ein Druck von in dem jeweiligen Wärmetauscher (120, 220) befindlichem Medium reduziert wird.

3. Verfahren nach Anspruch 2, wobei der jeweilige Wärmetauscher (120, 220) erwärmt wird, indem ein weiteres Medium (d), insbesondere mit einer Temperatur, die höher als eine aktuelle Temperatur des jeweiligen Wärmetauschers (120, 220) ist, durch den jeweiligen Wärmetauscher (120, 220), insbesondere mantelseitig, geleitet wird.

4. Verfahren nach einem der vorstehenden Ansprüche, wobei das wenigstens eine vorgegebene Kriterium das Erreichen einer minimalen Durchflussrate von Medium (a) durch den jeweilgen, im aktiven Zustand betriebenen Wärmetauscher (110, 210) und/oder eines maximalen Druckverlustsund/oder einer maximalen Austrittstemperatur des Mediums aus dem jeweiligen Wärmetauscher (a) umfasst.

5. Verfahren nach einem der vorstehenden Ansprüche, wobei von den mehreren Wärmetauschern (210, 220) wenigstens ein Wärmetauscher (210, 220) mehrere Kanäle (211, 212, 213, 221, 222, 223) aufweist, durch die das Medium (a) leitbar ist,
wobei, wenn einer der Wärmetauscher (210) mit den mehreren Kanälen (211, 212, 213) im aktiven Zustand betrieben wird, durch wenigstens einen der Kanäle (211) das Medium (a) geleitet wird und durch wenigstens einen anderen (212, 213) der Kanäle das Medium (a) nicht geleitet wird, und
wobei der wenigstens eine Kanal (211), durch den das Medium (a) geleitet wird, gewechselt wird, sobald wenigstens ein vorgegebenes weiteres Kritierum erfüllt ist.

6. Verfahren nach Anspruch 5, wobei das Medium (a) nach einem Wechsel des wenigstens einen Kanals (211), durch den das Medium (a) geleitet wird, durch wenigstens einen Kanal (212, 213), durch den es während eines aktuellen, ununterbrochenen aktiven Zustands noch nicht geleitet wurde, geleitet wird.

7. Verfahren nach Anspruch 5 oder 6, wobei, wenn einer der Wärmetauscher (220) mit den mehreren Kanälen (221, 222, 223) im inaktiven Zustand betrieben wird, die mehreren Kanäle (221, 222, 223) des jeweiligen Wärmetauschers (220) gleichzeitig von der wenigstens einen ausgefrorenen Komponente (c), sofern vorhanden, befreit werden.

8. Verfahren nach einem der vorstehenden Ansprüche, wobei als Medium (a) Erdgas verwendet wird, und wobei die wenigstens eine Komponente (c) ausgewählt ist aus einer Gruppe umfassend wenigstens eine schwersiedende KohlenwasserstoffKomponente mit sechs bis sechzehn, vorzugsweise sechs bis zehn, Kohlenstoffatomen, Kohlenstoffdioxid, Wasser, und eine Schwefelverbindung aus der Gruppe der Thiole oder Hydride.

9. Anlage (100, 200) zum Abkühlen eines Mediums (a) mit mehreren Wärmetauschern (110, 120, 210, 220), durch die das Medium (a) leitbar ist und die jeweils in einem aktiven Zustand betreibbar sind, in dem das Medium (a) zur Abkülung durch den jeweiligen Wärmetauscher (110, 210) leitbar ist und wenigstens eine Komponente (c) des Mediums (a) in dem jeweiligen Wärmetauscher (110, 210) ausfrierbar ist,
**dadurch gekennzeichnet, dass** die mehreren Wärmetauscher (110, 120, 210, 220) jeweils auch in einem inaktiven Zustand betreibbar sind, in dem das Medium (a) nicht durch den jeweiligen Wärmetauscher (120, 220) leitbar ist und der jeweilige Wärmetauscher (120, 220) von der wenigstens einen ausgefrorenen Komponente (c), sofern vorhanden, befreibar ist,
wobei die Anlage (100, 200) derart ausgebildet ist, dass wenigstens ein Wärmetauscher (110, 210) im aktiven Zustand und zugleich wenigstens ein Wärmetauscher (120, 220) im inaktiven Zustand betreibbar sind, und
wobei die Anlage (100, 200) weiterhin derart ausgebildet ist, dass weinigstens einer der Wärmetauscher (110, 210), die in dem aktiven Zustand betrieben werden, in den inaktiven Zustand bringbar ist und dass wenigstens einer der Wärmetauscher (120, 220), die in dem inaktiven Zustand betrieben werden, in den aktiven Zustand bringbar ist.

10. Anlage (100, 200) nach Anspruch 9, wobei die Anlage (100, 200) weiterhin derart ausgebildet ist, dass ein jeweiliger Wärmetauscher (120, 220) in dem inaktiven Zustand zur Befreiung von der wenigstens einen ausgefrorenen Komponente (c) erwärmbar ist und/oder dass ein Druck von einem in dem jeweligen Wärmetauscher (120, 220) befindlichen Medium in dem inaktiven Zustand zur Befreiung von der wenigstens einen ausgefrorenen Komponente (c) reduzierbar ist.

11. Anlage (100, 200) nach Anspruch 10, wobei der jeweilige Wärmetauscher (120, 220) erwärmbar ist, indem ein weiteres Medium (d), insbesondere mit einer Temperatur, die höher als eine aktuelle Temperatur des jeweiligen Wärmetauschers (120, 220) ist, durch den jeweilgen Wärmetauscher (120, 220), insbesondere mantelseitig, leitbar ist.

12. Anlage (200) ach einem der Ansprüche 9 bis 11, wobei von den mehreren Wärmetauschern (210, 220) wenigstens ein Wärmetauscher (210, 220) mehrere Kanäle (211, 212, 213, 221, 222, 223) aufweist, durch die das Medium (a) leitbar ist,
wobei bei dem wenigstens einen Wärmetauscher (210) mit den mehreren Kanälen (211, 212, 213), wenn er im aktiven Zustand betrieben wird, durch wenigstens einen (211) der Kanäle das Medium (a) leitbar und durch wenigstens einen anderen (212, 213) der Kanäle das Medium (a) nicht leitbar ist, und
wobei der wenigstens eine Wärmetauscher (210) mit den mehreren Kanälen (211, 212, 213) derart ausgebildet ist, dass der wenigstens eine Kanal (211), durch den das Medium (a) leitbar ist, zumindest während des aktiven Zustands wechselbar ist.
